# EUROPÄISCHE PATENTSCHRIFT

(11) **EP 1 508 669 B1**
(45) Veröffentlichungstag und Bekanntmachung des Hinweises auf die Patenterteilung: **21.03.2007**
(21) Anmeldenummer: 03018880.9
(22) Anmeldetag: 19.08.2003
(51) Int. Cl.: F01D 5/14, F04D 29/54, F02C 7/04

(54) **Vorleitschaufelring für einen Verdichter und eine Turbine**
Stator vanes ring for a compressor and a turbine
Diaphragme pour compresseur et turbine

(43) Veröffentlichungstag der Anmeldung: 23.02.2005
(73) Patentinhaber: SIEMENS AKTIENGESELLSCHAFT, 80333 München (DE)
(72) Erfinder: Mönig, Reinhard, Dr., 47877 Willich (DE)

(56) Entgegenhaltungen:
- EP-A- 1 098 092
- DE-A- 4 326 800
- FR-A- 2 205 927
- US-A- 4 930 984

## Beschreibung

Die Erfindung betrifft einen Vorleitschaufelring für einen Verdichter nach dem Oberbegriff des Anspruchs 1, einen Verdichter nach dem Oberbegriff des Anspruchs 9 und eine Turbine nach dem Oberbegriff des Anspruchs 10.

Es ist bekannt, verstellbare Vorleitschaufeln in einem Ring angeordnet vor der Eintrittsöffnung eines Axialverdichters zu befestigen. Die Profile der Vorleitschaufeln und deren Form werden dabei für eine achsparallele Zuströmung bei einem gemittelten Geschwindigkeitsniveau ausgelegt.

Die Zuführung der vom Verdichter angesaugten Luft erfolgt durch ein Ansaughaus, in dem eine Umlenkung von radialer Zuführung in axialer Führung der Luft stattfindet. Diese anfängliche radiale Zuströmung führt nach der Umlenkung vor dem ringförmigen Verdichtereintritt zu einer über den Umfang ungleichmäßigen und unsymmetrischen Verteilung der Luftströmung. Diese Ungleichförmigkeit bedingt unterschiedliche Zuströmwinkel und Zuströmgeschwindigkeiten an den Vorleitschaufeln, so dass sich Strömungsverluste und ein reduzierter Wirkungsgrad des Verdichters ergibt.

Um diesen Ungleichförmigkeiten des Luftmassenstroms im Bereich des Verdichterringraums bzw. Verdichtereintritts zu begegnen, schlägt die DE 43 26 800 vor, einen Trennkörper im unteren Bereich des Ansaughauses als dreidimensionalen Körper vorzusehen, in welchem bisher Totwassergebiete auftraten. Der Trennkörper bewirkt eine Trennung zwischen einem linken und einem rechten Teilmassenstrom, so dass eine stationäre und symmetrische Zuströmung erreicht wird, was zu einem guten Wirkungsgrad und zu einer guten Pumpgrenze des Verdichters führt.

Weiter ist aus der EP 1 098 092 eine Verdichterleitschaufel bekannt, welche entlang ihrer radialen Erstreckung ein unterschiedlich gekrümmtes Schaufelprofil aufweist.

Ein Schaufelkranz einer Flugzeuggasturbine mit Leitschaufeln, die unterschiedliche Staffelungswinkel aufweisen, ist zudem aus der FR 2.205.927 bekannt.

Aufgabe der vorliegenden Erfindung ist es daher, die Strömungsverluste zu vermindern und den Wirkungsgrad und die Wirtschaftlichkeit eines Verdichters und einer Turbine zu erhöhen. Ferner ist es die Aufgabe der Erfindung, einen Vorleitschaufelring für einen Verdichter anzugeben, mit dem Strömungsverluste verringert werden.

Die auf den Vorleitschaufelring gerichtete Aufgabe wird durch die Merkmale des Anspruchs 1 gelöst. Ferner wird die auf den Verdichter gerichtete Aufgabe durch die Merkmale des Anspruchs 9 und die auf die Turbine gerichtete Aufgabe durch die Merkmale des Anspruchs 10 gelöst. Vorteilhafte Ausgestaltungen sind in den Unteransprüchen angegeben.

Die Erfindung löst sich von dem Gedanken, dass die Profile der Vorleitschaufeln des Vorleitschaufelrings identisch sind. Es wird vorgeschlagen, dass die Profilbereiche von zumindest zwei Vorleitschaufeln unterschiedliche Profilkrümmungen aufweisen. Dadurch wird der Vorleitschaufelring bzw. dadurch werden die Profile der Vorleitschaufeln bezogen auf die Drehachse des Rotors unsymmetrisch. Demzufolge wird der unsymmetrischen Anströmung des Vorleitschaufelrings nachgekommen, die durch die einseitige radiale Zuströmung, bezogen auf die Drehachse, hervorgerufen ist. Durch Messungen und/oder Berechnungen der räumlichen Strömung im Ansaughaus lässt sich die Strömungsverteilung für jede beliebige Geometrie von Ansaughaus und Verdichtereintrittsgehäuse ermitteln. Anhand der ermittelten Zuströmdaten im Ansaughaus und anhand der gewünschten Abströmdaten am Vorleitschaufelring bzw. am Verdichtereintritt lässt sich für jeden örtlichen Zuströmzustand ein verbessertes Profil für jede Vorleitschaufel des Vorleitschaufelringes bestimmen. Somit sind die Profile der Vorleitschaufeln auf die örtlichen Zuströmverhältnisse abgestimmt. Die Strömungsverluste durch Fehlanströmungen der Profile werden somit verringert und eine Erhöhung des Wirkungsgrades des Verdichters wird erreicht

Zur örtlichen Bestimmung der Anströmungen einer Vorleitschaufel werden folgende Parameter definiert :
- Zwischen dem Umlenkraum und dem Vorleitschaufelring wird eine ringförmige und senkrecht zur Drehachse liegende Strömungsebene definiert, deren Mittelpunkt auf der Drehachse liegt und durch die das Medium vom Umlenkraum zum Vorleitschaufelring strömt,
- die ringförmige Strömungsebene wird in zumindest einen koaxialen Zylinder eingeteilt, der bzw. die mittels radialer Sektorgrenzen in Spuren unterteilt ist bzw. sind,
- für das die Strömungsebene durchströmende Medium ist für jede Spur eine zum mittleren Bogen der Spur tangential gerichtete Strömungskomponente definiert, die in der Strömungsebene liegt,
- der Rotor weist für jede Spur eine zum Bogen der Spur tangential gerichtete Drehrichtungskomponente auf, die in der Strömungsebene liegt,
- jeder Spur ist ein korrespondierender Teilprofilbereich der Vorleitschaufeln zugeordnet.

Die Krümmung des Profilquerschnitts ist dabei von der Strömungskomponente und der Drehrichtungskomponente abhängig.

Die resultierenden Anströmungen der Vorleitschaufel ist sowohl von den örtlichen Strömungsverhältnissen stromauf der Vorleitschaufel als auch von der Drehrichtung des Rotors abhängig, da die am Rotor befestigten Verdichterlaufschaufeln der ersten Verdichterstufe unmittelbar stromab des Vorleitschaufelrings angeordnet sind. Für jede Spur kann durch einen Vergleich zwischen Drehrichtung des Rotors und der dort herrschenden tangentialen Strömungskomponente eine Profilkrümmung des zur Spur korrespondierenden Teilprofilbereichs der in der Spur vorgesehen Vorleitschaufeln bestimmt werden.

Einen geringeren Berechnungsaufwand und eine preiswerte Herstellung von Vorleitschaufeln kann erreicht werden, wenn der Vorleitschaufelring in Ringsektoren eingeteilt wird, wobei die Vorleitschaufeln eines Ringsektors identische Profilbereiche und Vorleitschaufeln unterschiedlicher Ringsektoren unterschiedlich gekrümmte Profilbereiche aufweisen. Die Herstellung von identischen Vorleitschaufeln, die innerhalb eines Ringsektors angeordnet werden, reduziert die Herstellungskosten.

Besonders geringe Strömungsverluste an den Vorleitschaufeln ergeben sich, wenn jeder Ringsektor des Vorleitschaufelrings nur eine Vorleitschaufel enthält. Für jede Vorleitschaufel wird ein eigenes Profil bestimmt, welches den örtlichen Anforderungen am Besten genügt.

In einer vorteilhaften Ausgestaltung weist der Ansaugkanal stromaufwärts eine im wesentlichen senkrecht zur Drehachse gerichtete Zuführung und einen sich in Strömungsrichtung daran anschließenden den Verdichterrotor umgreifenden Umlenkraum auf. Im Umlenkraum wird das durch die Zuführung in Radialrichtung zugeführte Medium in Axialrichtung zum Vorleitschaufelring umgelenkt. Dies ermöglicht eine kompakte Bauweise des Ansaughauses.

Besonders vorteilhaft ist die Weiterbildung, bei der der vom Befestigungsbereich sich in Richtung der Drehachse erstreckende Profilbereich der Vorleitschaufel aus mehreren aufeinanderfolgenden Teilprofilbereichen gebildet wird, die jeweils im Querschnitt eine unterschiedliche Profilkrümmung aufweisen und bei der die Profilkrümmung eines Teilprofilbereiches bezogen auf die Profilkrümmung eines anderen Teilprofilbereiches derselben Vorleitschaufel unterschiedlich gekrümmt sein kann. Die örtliche Anströmung der Vorleitschaufel kann entlang ihrer Erstreckung unterschiedlich sein. Daher ist es vorteilhaft, wenn das Profil der Vorleitschaufel in Richtung der Längserstreckung in Teilprofilbereiche unterteilt wird und die Teilprofilbereiche an die örtlichen Anströmungen angepasst sind.

In einer vorteilhaften Ausgestaltung weist die Spur, in dem die Strömungskomponente und die Drehrichtungskomponente entgegengesetzt sind, einen dazu korrespondierenden Teilprofilbereich mit einem stärker gekrümmten Profilquerschnitt auf als der Teilprofilbereich, dessen korrespondierende Spur eine Strömungskomponente aufweist, die der Drehrichtungskomponente gleichgerichtet ist. Somit wird jeder Spur entsprechend der örtlich berechneten Strömungsverhältnisse eine bestmögliche Profilkrümmung zugeordnet, welche geringere Strömungsverluste im Medium herbeiführt.

In einer vorteilhaften Weiterbildung weist die Spur, in dem die Strömungskomponente annähernd Null ist, einen korrespondierenden Teilprofilbereich mit einem stärker gekrümmten Profilquerschnitt auf als der Teilprofilbereich, dessen korrespondierende Spur eine Strömungskomponente aufweist, die der Drehrichtungskomponente gleichgerichtet ist und einen schwächer gekrümmten Profilquerschnitt aufweist als der Teilprofilbereich, dessen korrespondierende Spur eine Strömungskomponente aufweist, die der Drehrichtungskomponente entgegengesetzt ist.

Eine besonders einfache Anordnung unterschiedlicher Vorleitschaufeln ist gegeben, wenn die ringförmige Strömungsebene in genau einen Zylinder eingeteilt ist, der in zwei gleich große Spuren mit aneinanderliegenden sich radial erstreckenden Sektorgrenzen unterteilt ist und das die Sektorgrenzen parallel zur radialen Zuführung des Ansaugkanals verlaufen. Dann weist eine Spur eine Strömungskomponente auf, die der Drehrichtungskomponente entgegengesetzt ist und die andere Spur eine Strömungskomponente, die der Drehrichtungskomponente gleichgerichtet ist. So werden nur zwei Typen von Vorleitschaufeln benötigt.

In einer weiteren Ausgestaltung weist ein Verdichter einen unsymmetrischen Vorleitschaufelring auf.

Zweckmäßigerweise ist eine Turbine, insbesondere eine stationäre Gasturbine, mit einem Verdichter gekoppelt, der einen unsymmetrischen Vorleitschaufelring aufweist.

Die Erfindung wird anhand von Zeichnungen erläutert.
Dabei zeigen:
- Figur 1: eine Gasturbine in einem Längsteilschnitt,
- Figur 2: einen Ausschnitt aus einem Verdichter der Gasturbine,
- Figur 3: eine ringförmige Strömungsebene gemäß des Schnittes A-A,
- Figur 4: eine Vorleitschaufel eines Verdichters und
- Figur 5: mehrere Profilquerschnitte der Vorleitschaufel des Verdichters.

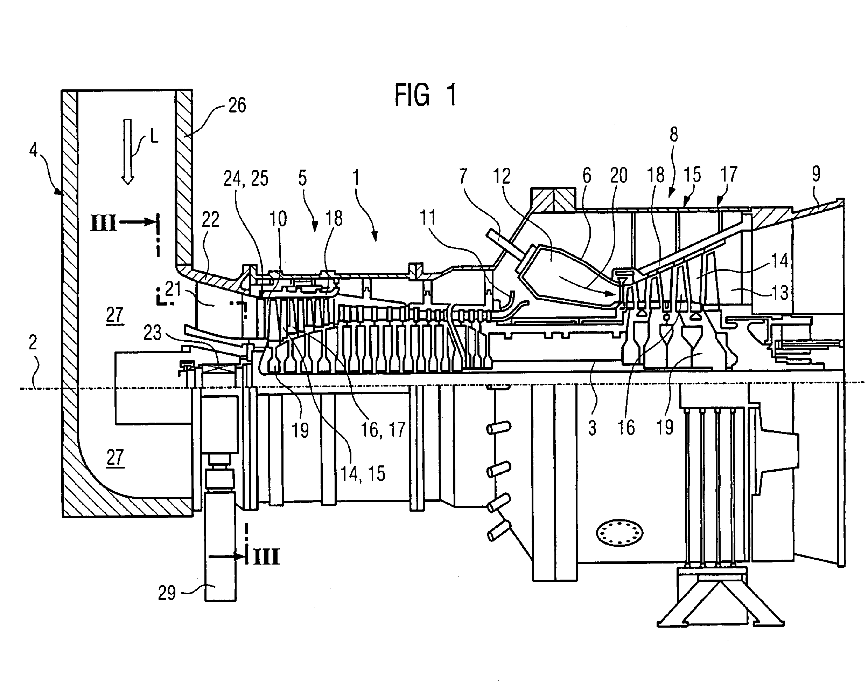

Die Figur 1 zeigt eine Gasturbine 1 in einem Längsteilschnitt. Sie weist im Inneren einen um eine Drehachse 2 drehgelagerten Rotor 3 auf, der auch als Turbinenläufer oder Rotorwelle bezeichnet wird. Entlang des Rotors 3 folgen ein Ansauggehäuse 4, ein Verdichter 5, eine torusartige Ringbrennkammer 6 mit mehreren koaxial angeordneten Brennern 7, eine Turbine 8 und das Abgasgehäuse 9 aufeinander.

Im Verdichter 5 ist ein ringförmiger Verdichterkanal 10 vorgesehen, der sich in Richtung der Ringbrennkammer 6 im Querschnitt verjüngt. Am brennkammerseitigen Ausgang des Verdichters 5 ist ein Diffusor 11 angeordnet, der mit der Ringbrennkammer 6 in Strömungsverbindung steht. Die Ringbrennkammer 6 bildet einen Verbrennungsraum 12 für ein Gemisch aus einem Brennmittel und verdichteter Luft. Ein Heißgaskanal 13 ist mit dem Verbrennungsraum 12 in Strömungsverbindung, wobei dem Heißgaskanal 13 das Abgasgehäuse 9 nachgeordnet ist.

Im Verdichterkanal 10 und im Heißgaskanal 13 sind jeweils alternierend Schaufelringe angeordnet. Es folgt einem aus Leitschaufeln 14 gebildeter Leitschaufelring 15 jeweils ein aus Laufschaufeln 16 gebildeter Laufschaufelring 17. Die feststehenden Leitschaufeln 14 sind dabei mit einem Stator 18 verbunden, wo hingegen die Laufschaufeln 16 am Rotor 3 mittels einer Scheibe 19 verbunden sind.

Während des Betriebes der Gasturbine 1 wird vom Verdichter 5 durch das Ansauggehäuse 4 Luft 21 angesaugt und im Verdichterkanal 10 verdichtet. Eine am brennerseitigen Ende des Verdichters 5 bereitgestellt Luft *L* wird durch den Diffusor 11 zu den Brennern 7 geführt und dort mit einem Brennmittel vermischt. Das Gemisch wird dann unter Bildung eines Arbeitsfluids 20 im Verbrennungsraum 10 verbrannt. Von dort aus strömt das Arbeitsfluid 20 in den Heißgaskanal 13. An den in der Turbine 8 angeordneten Leitschaufeln 14 und an den Laufschaufeln 16 entspannt sich das Arbeitsfluid 20 impulsübertragend, so dass der Rotor 3 angetrieben wird und mit ihm eine an ihn angekoppelte Arbeitsmaschine (nicht dargestellt).

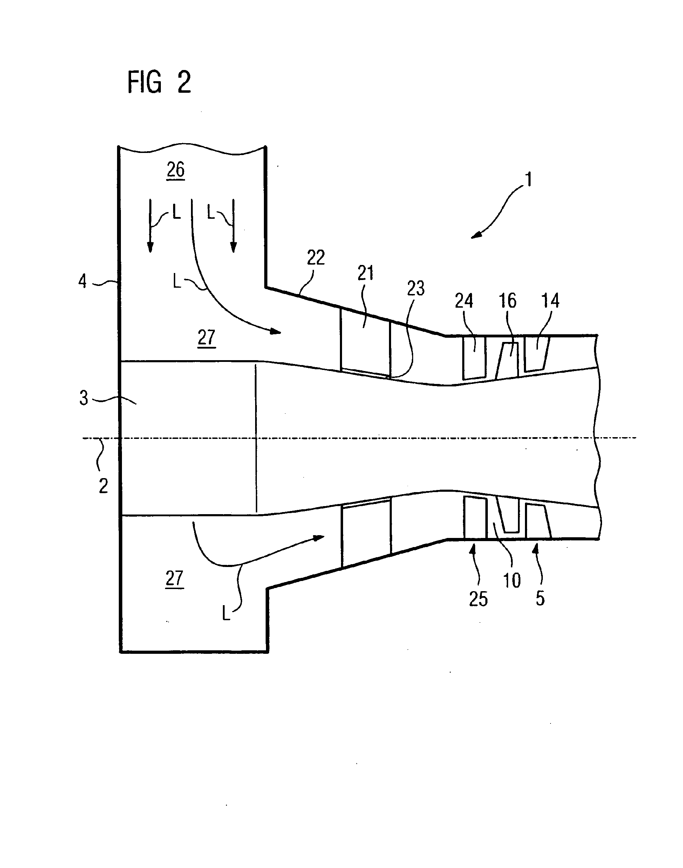

Figur 2 zeigt einen Ausschnitt aus einem Verdichter 5 der Gasturbine 1. Zwischen dem Ansaughaus 4 und dem Verdichter 5 stützen Stützrippen 21 an einem Innengehäuse 22 ein Lager 23 ab, in dem der Rotor 3 drehgelagert ist. Stromab der Stützrippen 21 folgt ein aus Vorleitschaufeln 24 gebildeter Vorleitschaufelring 25. Der Vorleitschaufelring 25 besteht aus in gleichen Winkelabständen radial angeordneten Vorleitschaufeln 24, die am Innengehäuse 22 montiert sind. Im Verdichterkanal 10 sind stromab des Vorleitschaufelrings 25 Laufschaufeln 16 und Leitschaufeln 14 der ersten Verdichterstufe des Verdichters 5 vorgesehen.

Das Ansauggehäuse 4 weist eine im wesentlichen senkrecht zur Drehachse 2 gerichtete Zuführung 26 auf, an die sich ein Umlenkraum 27 anschließt. Dieser umgreift den Rotor 3.

Beim Betrieb erfolgt im Umlenkraum 27 die Umlenkung der durch die Zuführung 26 angesaugten und radial strömenden Luft *L* in Axialrichtung. Anschließend strömt die Luft *L* an den Stützrippen 21 vorbei und auf die in einem Ring angeordneten Vorleitschaufeln 24 zu.

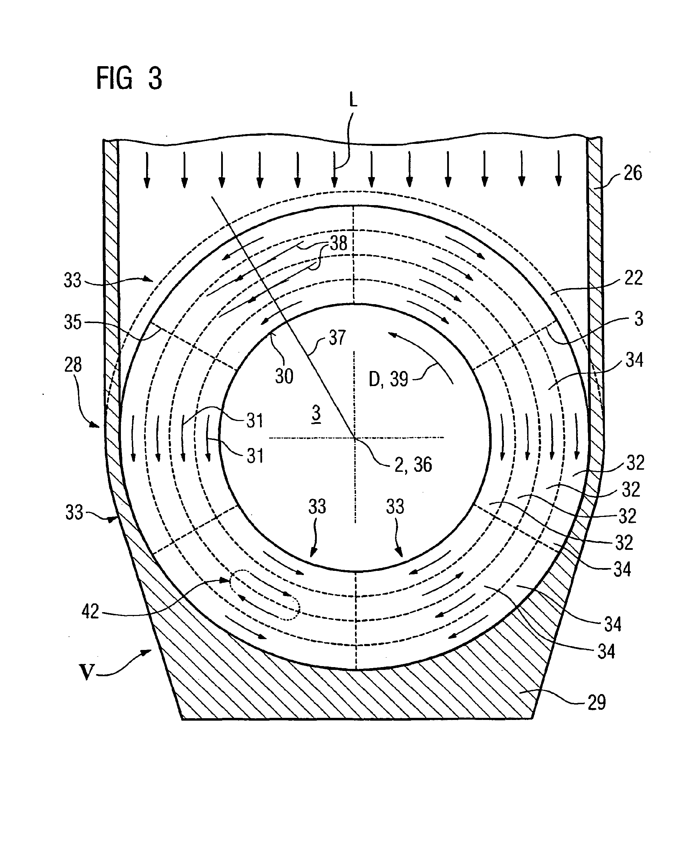

Figur 3 zeigt den in Figur 1 mit A-A bezeichneten Schnitt, in der eine Strömungsebene 28 liegt. Der Verdichterkanal 10 wird von einem radial außenliegenden Innengehäuse 22 begrenzt. Dabei ist das Innengehäuse 22 teilweise als eine Stütze 29 der Gasturbine 1 ausgebildet. Radial innenliegend wird die ringförmige Strömungsebene 28 von einer Innenwand 30 begrenzt, die den Rotor 3 koaxial umgreift. Die Strömungsebene 28 ist in Axialrichtung so gewählt, dass sie mit den Anströmkanten 43 der Vorleitschaufeln 24 übereinstimmt.

Die in der Zuführung 26 strömende Luft *L* strömt in Radialrichtung zur Drehachse 2 des Verdichters 5. Im Umlenkraum 27 erfolgt die Umlenkung in Axialrichtung, wobei durch den ringförmigen Verdichterkanal 10 die Luftströmung ebenfalls ein tangentiale Beschleunigung erfährt, so dass die Luftströmung mit einem Drall in Umfangsrichtung, mit oder gegen den Uhrzeigersinn, strömt, so dass sie eine tangentiale Strömungskomponente aufweist.

Die ringförmige Strömungsebene 28 ist durch vier Zylinder 32 radial und in Umfangsrichtung in sechs Sektoren 33 zerlegt, so dass vierundzwanzig Spuren 34 die Strömungsebene 28 bilden. Dabei sind die Achsen der Zylinder 32 so gewählt, dass diese mit der Drehachse 2 des Rotors 3 zusammenfallen. Jeder Sektor 32 weist radial gerichtete Sektorgrenzen 35 auf, deren gedachte Verlängerung einen Mittelpunkt 36 der Strömungsebene 28 schneiden. Zwischen zwei benachbarten Sektorgrenzen 35 ist für den eingeschlossenen Sektor 33 eine Winkelhalbierende 37 definiert. Für jede Spur 34 schneidet eine Tangente 38 in rechten Winkel die Winkelhalbierende 37, wobei der Schnittpunkt radial mittig im Bogen der Spur 34 liegt.

Für jede Spur 34 wird durch Berechnungs- und Messverfahren die in der Strömungsebene 28 herrschende Strömung der angesaugten Luft *L* beim Betrieb der Gasturbine 1 ermittelt. Daraus lässt sich dann eine Strömungskomponente 31 bestimmen, die parallel zu der korrespondierenden Tangente 38 gerichtet ist und in der Strömungsebene 28 liegt. Diese Strömungskomponente 31 wird durch die gebogenen Pfeile dargestellt. Die die Strömungsebene 28 durchströmende Luft *L* strömt im Wesentlichen in Axialrichtung.

Gleichfalls kann durch Berechungs- und Messverfahren Strömungskomponenten 31 bestimmt werden, die auf eine in der Strömungsebene (28) liegende Anomalie hindeutet. Beispielhaft dafür ist ein Wirbel 42 dargestellt.

Ebenso lässt sich für jede Spur 34 der Strömungsebene 28 eine Drehrichtungskomponente 39 definieren, die in senkrechter Richtung zum Radius des Rotors 3 die Drehrichtung *D* beschreibt. Da die Drehrichtung *D* des Rotors 3 für alle Spuren 34 identisch ist, unterscheiden sich die Drehrichtungskomponenten 39 untereinander nur durch die Lage des gewählten Radius. Für jedes Segment 33 fallen die Radien mit der Winkelhalbierenden 37 zusammen.

Jeder Spur 33 wird ein Teilprofilbereich 40 zumindest einer Vorleitschaufel 24 zugeordnet. Dabei ist die Krümmung des Profilquerschnitts des Teilprofilbereichs 40 abhängig von der Richtung der Strömungskomponente 31 und der Drehrichtungskomponente 39.

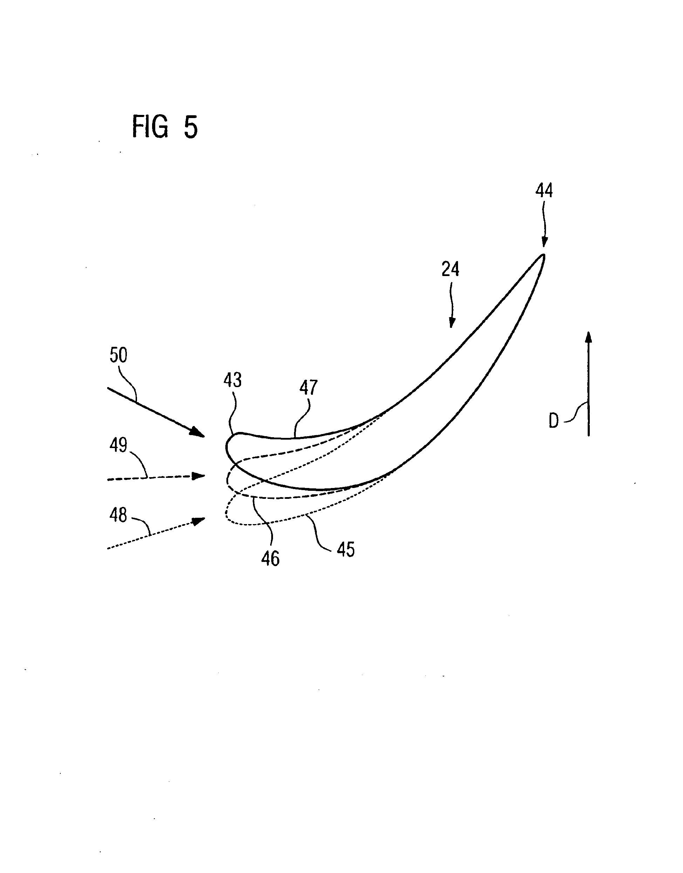

Ist der Drehsinn der Drehrichtungskomponente 39 und der Drehsinn der Strömungskomponente 31 einer Spur 33 bezogen auf den Mittelpunkt 35 identisch, also bei Mitdrall, so weisen die korrespondierenden Teilprofilbereiche 40 der Vorleitschaufeln 24, die in dieser Spur 33 vorgesehen sind, einen schwächer gekrümmten Profilquerschnitte 45 auf. In Fig. 5 wird das schwächer gekrümmte Profil mit einer gepunkteten Linie dargestellt.

Wenn die Drehrichtungskomponente 38 und die Strömungskomponente 31 einer Spur 33 entgegengesetzt sind, also bei Gegendrall, werden die für die Spur 33 vorgesehene Vorleitschaufeln 24, an den korrespondierenden Teilprofilbereiche 40 mit einem am stärkeren gekrümmten Profilquerschnitt 47 ausgestattet.

Ist die Strömungskomponente 31 einer Spur 33 annähernd Null, so ist der Querschnitt des Teilprofilbereichs 40, der zu dieser Spur 33 korrespondiert, mit einem mittleren gekrümmten Profilquerschnitt 46 ausgestattet.

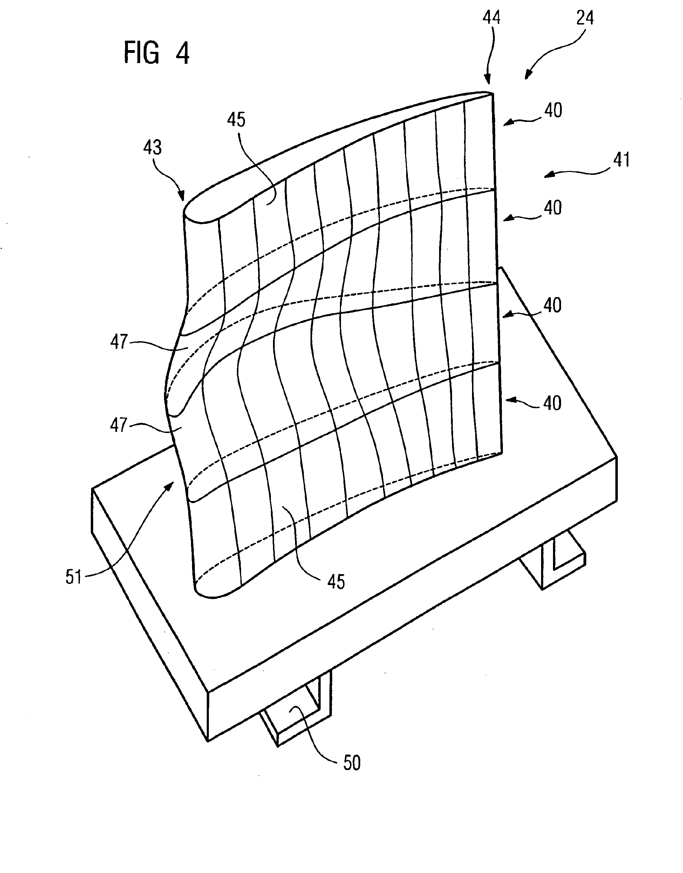

Figur 4 zeigt eine korrespondiere Vorleitschaufel 24 für ein Segment *V* aus Figur 3. Sie weist einen Befestigungsbereich 50 auf, von dem aus sich ein Profil 51 mit einem Profilbereich 41 in Radialrichtung erstreckt. Dieser Profilbereich 41 ist in vier radial gestapelte Teilprofilbereiche 40 unterteilt, die zu den vier radial gestapelten Spuren 34 des Segmentes *V* korrespondieren.

Die Vorleitschaufeln 24 ist ferner um ihre Längserstreckung drehgelagert, um das Profil 51 gegenüber der Plattform oder gegenüber der Innenwand des Innengehäuses 22 zu verdrehen (in Figur 4 nicht dargestellt).

Vom Befestigungsbereich 50 ausgehend zum freien Ende hin weist das Profil 51 an dem ersten Teilprofilbereich 40 einen Querschnitt auf, der als schwächer gekrümmter Profilquerschnitt 45 definiert ist. Die sich an den ersten Teilprofilbereich 40 anschließenden zweiten und dritten Teilprofilbereiche 40 korrespondieren zu den radial mittleren Spuren 34 des Segments *V*. Die Berechnungen und Messungen zeigen dort den Wirbel 42, so dass die zweiten und dritten Teilprofilbereiche 40 einen stärker gekrümmten Profilquerschnitt 47 aufweisen, um trotz des Wirbels 42 eine verbesserte Anströmung zu erreichen und die Strömungsverluste zu verringern.

Die radial innen liegende Spur 34 des Segmentes *V* weist eine mit der Drehrichtung *D* gleichgerichtete Strömungskomponente 31 auf, so dass der dazu korrespondierende vierte Teilprofilebereich 40, der am freien Ende der Vorleitschaufeln 24 angeordnet ist, einen schwächer gekrümmten Profilquerschnitt 45 aufweist.

Fig. 5 zeigt drei unterschiedliche gekrümmte Querschnitte einer Vorleitschaufel 24. Jeder der drei dargestellten Querschnitte ist dabei in einer unterschiedlichen Linienart dargestellt. Da die Profilkrümmungen der drei Querschnitte im Bereich der Abströmkante 44 identisch sind, ist nur der volle Linienzug dargestellt. Im Bereich der Anströmkante 43 sind die drei Querschnitte unterschiedlich gekrümmt. Eine Ausgestaltung mit im Bereich der Abströmkante 47 unterschiedlich gekrümmten Profilquerschnitte 47 ist ebenfalls möglich.

Der stärker gekrümmte Profilquerschnitt 47 ist in einer Volllinie dargestellt, der mittlere gekrümmte Profilquerschnitt 46 ist in einer Strichlinie und der schwächer gekrümmte Profilquerschnitt 45 in der gepunkteten Linienart.

Die bestmögliche Anströmung eines jeden Profilquerschnitts 45, 46, 47 wird durch jeweils einen analog dargestellten Pfeil 48, 49 und 50 gezeigt. Durch die Berücksichtung der örtlichen Zuströmverhältnisse und der Drehrichtung D des Rotors 3 kann eine Profilkrümmung angegeben werden, die Strömungsverluste von Verdichtern reduziert.

## Patentansprüche

1. Vorleitschaufelring (25) für einen ein gasförmiges Medium ansaugenden, entlang einer Drehachse (2) eines Verdichterrotors gerichteten Verdichter (5),
der zwischen einem von der Drehachse (2) abweichenden Ansaugkanal für das Medium und einer ringförmigen zur Drehachse (2) koaxialen Eintrittsöffnung des Verdichters (5) für das Medium angeordnet ist und
der aus einer Anzahl von sich bezüglich der Drehachse (2) in Radialrichtung erstreckenden Vorleitschaufeln (24) gebildet wird, die jeweils einen drehachsfernen Befestigungsbereich und einen vom Befestigungsbereich sich in Richtung der Drehachse (2) erstreckenden Profilbereich (41) aufweisen,
wobei jeder Profilbereich (41) im Querschnitt zumindest eine Profilkrümmung aufweist,
wobei
• zwischen einem Umlenkraum (27) und dem Vorleitschaufelring (25) eine ringförmige und senkrecht zur Drehachse (2) liegende Strömungsebene (28) definiert ist, durch die das Medium vom Umlenkraum (27) zum Vorleitschaufelring (25) strömt,
• die ringförmige Strömungsebene (28) in zumindest einen koaxialen Zylinder (32) eingeteilt ist, der bzw. die in Spuren (34) unterteilt ist bzw. sind,
• für das die Strömungsebene (28) durchströmende Medium für jede Spur (34) eine zum Bogen der Spur (34) tangential gerichtete Strömungskomponente (31) definiert ist, die in der Strömungsebene (28) liegt und
• der Verdichterrotor für jede Spur (34) eine zum Bogen der Spur (34) tangential gerichtete Drehrichtungskomponente (39) aufweist, die in der Strömungsebene (28) liegt,
**dadurch gekennzeichnet,**
**dass** jeder Spur (34) ein korrespondierender Teilprofilbereich (40) der Vorleitschaufeln (24) des Vorleitschaufelrings (25) zugeordnet ist, dessen Profilkrümmung von der Strömungskomponente (31) und der Drehrichtungskomponente (39) abhängig ist, so dass mindestens zwei der Vorleitschaufeln (24) unterschiedliche Profilkrümmungen aufweisen.

2. Vorleitschaufelring (25) nach Anspruch 1,
**dadurch gekennzeichnet, dass**
der Vorleitschaufelring (25) in Ringsektoren (33) eingeteilt ist, wobei die Vorleitschaufeln (24) eines Ringsektors (33) identische Profilbereiche (41) und die Vorleitschaufeln (24) unterschiedlicher Ringsektoren (33) unterschiedlich gekrümmte Profilbereiche (41) aufweisen.

3. Vorleitschaufelring (25) nach Anspruch 2,
**dadurch gekennzeichnet, dass**
jeder Ringsektor (33) des Vorleitschaufelrings (25) nur eine Vorleitschaufel (24) enthält.

4. Vorleitschaufelring (25) nach Anspruch 1, 2 oder 3,
**dadurch gekennzeichnet, dass**
der Ansaugkanal stromaufwärts eine im wesentlichen senkrecht zur Drehachse (2) gerichtete Zuführung und einen sich daran anschließenden den Verdichterrotor umgreifenden Umlenkraum aufweist, in dem das durch die Zuführung in Radialrichtung zuführbare Medium in Axialrichtung zum Vorleitschaufelring (25) umlenkbar ist.

5. Vorleitschaufelring (25) nach einem der Ansprüche 1 bis 4,
**dadurch gekennzeichnet, dass**
der vom Befestigungsbereich sich in Richtung der Drehachse (2) erstreckende Profilbereich (41) der Vorleitschaufel (24) aus mehreren aufeinanderfolgenden Teilprofilbereichen (40) gebildet wird, die jeweils im Querschnitt eine Profilkrümmung aufweisen und
dass die Profilkrümmung eines Teilprofilbereichs (40) bezogen auf die Profilkrümmung eines anderen Teilprofilbereichs (40) derselben Vorleitschaufel (24) unterschiedlich gekrümmt ist.

6. Vorleitschaufelring (25) nach einem der vorangehenden Ansprüche,
**dadurch gekennzeichnet, dass**
die Spur (34), in dem die Strömungskomponente (31) und die Drehrichtungskomponente entgegengesetzt sind, einen korrespondierenden Teilprofilbereich (40) mit einem stärker gekrümmten Querschnitt (47) aufweist als der Teilprofilbereich (40), dessen korrespondierende Spur (34) eine Strömungskomponente (31) aufweist, die der Drehrichtungskomponente gleichgerichtet ist.

7. Vorleitschaufelring (25) nach einem der vorangehenden Ansprüche,
**dadurch gekennzeichnet, dass**
die Spur (34), in dem die Strömungskomponente (31) annähernd Null ist, einen korrespondierenden Teilprofilbereich (40) mit einem stärker gekrümmten Querschnitt (47) aufweist als der Teilprofilbereich (40), dessen korrespondierende Spur (34) eine Strömungskomponente (31) aufweist, die der Drehrichtungskomponente gleichgerichtet ist und einen schwächer gekrümmten Querschnitt (45) aufweist als der Teilprofilbereich (40), dessen korrespondierende Spur eine Strömungskomponente (31) aufweist, die der Drehrichtungskomponente entgegengesetzt ist.

8. Vorleitschaufelring (25) nach einem der vorangehenden Ansprüche,
**dadurch gekennzeichnet, dass**
die ringförmige Strömungsebene (28) in genau einen Zylinder (32) eingeteilt ist, der in zwei gleichgroße Spuren (34) mit aneinanderliegenden sich radial erstreckenden Sektorgrenzen (35) unterteilt ist und dass die Sektorgrenzen (35) parallel zur radialen Zuführung des Ansaugkanals verlaufen.

9. Verdichter (5) mit einem Vorleitschaufelring (25) nach einem der Ansprüche 1 bis 8.

10. Turbine (8) mit einem Verdichter (5), der einen Vorleitschaufelring (25) nach einem der Ansprüche 1 bis 8 aufweist.

11. Turbine (8) nach Anspruch 10,
**dadurch gekennzeichnet, dass**
die Turbine (8) als stationäre Gasturbine ausgebildet ist.

## Claims

1. Inlet guide vane ring (25) for a compressor (5), which inducts a gaseous medium and is aligned along a rotational axis (2) of a compressor rotor, which inlet guide vane ring is installed between an intake duct for the medium, which diverges from the rotational axis (2), and an annular inlet opening of the compressor (5) for the medium, which is coaxial to the rotational axis (2), and
which is formed from a plurality of inlet guide vanes (24) which extend in the radial direction with regard to the rotational axis (2), which inlet guide vanes in each case have a fastening section remote from the rotational axis, and a profile section (41) which extends from the fastening section in the direction of the rotational axis (2),
wherein each profile section (41) in cross section has at least one profile curvature,
wherein
• an annular flow plane (28) which lies perpendicularly to the rotational axis (2) is defined between a deflection plenum (27) and the inlet guide vane ring (25), through which the medium flows from the deflection plenum (27) to the inlet guide vane ring (25),
• the annular flow plane (28) is divided into at least one coaxial cylinder (32), which is, or are, as the case may be, divided into channels (34),
• for the medium which flows through the flow plane (28), a flow component (31), which is tangentially orientated to the curve of the channel (34), is defined for each channel (34), which flow component lies in the flow plane (28), and
• for each channel (34), the compressor rotor has a rotational direction component (39) which is tangentially orientated to the curve of the channel (34), which rotational direction component lies in the flow plane (28),
**characterized in that**
a corresponding profile sub-section (40) of the inlet guide vanes (24) of the inlet guide vane ring (25) is associated with each channel (34), the profile curvature of which is dependent upon the flow component (31) and the rotational direction component (39), so that at least two of the inlet guide vanes (24) have different profile curvatures.

2. Inlet guide vane ring (25) according to Claim 1,
**characterized in that**
the inlet guide vane ring (25) is divided into ring sectors (33), wherein the inlet guide vanes (24) of one ring sector (33) have identical profile sections (41), and the inlet guide vanes (24) of different ring sectors (33) have differently curved profile sections (41).

3. Inlet guide vane ring (25) according to Claim 2,
**characterized in that**
each ring sector (33) of the inlet guide vane ring (25) contains only one inlet guide vane (24).

4. Inlet guide vane ring (25) according to Claim 1, 2 or 3,
**characterized in that**
the intake duct upstream has an inlet, which is orientated basically perpendicularly to the rotational axis (2), and a deflection plenum which adjoins the inlet and encompasses the compressor rotor, in which the medium which is feedable through the inlet in the radial direction is deflectable into the axial direction towards the inlet guide vane ring (25).

5. Inlet guide vane ring (25) according to one of Claims 1 to 4,
**characterized in that**
the profile section (41) of the inlet guide vane (24) which extends from the fastening section in the direction of the rotational axis (2) is formed from a plurality of consecutive profile sub-sections (40), which in cross section have a profile curvature in each case, and
that the profile curvature of one profile sub-section (40) is differently curved with regard to the profile curvature of another profile sub-section (40) of the same inlet guide vane (24) .

6. Inlet guide vane ring (25) according to one of the preceding claims,
**characterized in that**
the channel (34), in which the flow component (31) and the rotational direction component are opposite, has a corresponding profile sub-section (40) with a more sharply curved cross section (47) than the profile sub-section (40) of which the corresponding channel (34) has a flow component (31) which is in the same direction as the rotational direction component.

7. Inlet guide vane ring (25) according to one of the preceding claims,
**characterized in that**
the channel (34), in which the flow component (31) is approximately zero, has a corresponding profile sub-section (40) with a more sharply curved cross section (47) than the profile sub-section (40) of which the corresponding channel (34) has a flow component (31) which is in the same direction as the rotational direction component, and has a more gently curved cross section (45) than the profile sub-section (40) of which the corresponding channel has a flow component (31) which is in the opposite direction to the rotational direction component.

8. Inlet guide vane ring (25) according to one of the preceding claims,
**characterized in that**
the annular flow plane (28) is divided into just one cylinder (32) which is divided into two channels (34) of equal size, with radially extending sector boundaries (35) which are adjacent to each other, and that the sector boundaries (35) extend parallel to the radial inlet of the intake duct.

9. Compressor (5) with an inlet guide vane ring (25) according to one of Claims 1 to 8.

10. Turbine (8) with a compressor (5), which has an inlet guide vane ring (25) according to one of Claims 1 to 8.

11. Turbine (8) according to Claim 10,
**characterized in that**
the turbine (8) is constructed as a stationary gas turbine.

## Revendications

1. Diaphragme (25) d'aube directrice amont pour un compresseur (5) aspirant un fluide gazeux et dirigé le long d'un axe (2) de rotation d'un rotor de compresseur,
qui est disposé entre un canal d'aspiration du fluide s'écartant de l'axe (2) de rotation et une ouverture d'entrée du fluide dans le compresseur (5), de forme annulaire et coaxiale à l'axe (2) de rotation, et qui est formé d'un certain nombre d'aubes (24) directrices amont s'étendant en direction radiale par rapport à l'axe (2) de rotation et ayant, respectivement, une partie de fixation éloignée de l'axe de rotation et une partie (41) profilée s'étendant de la partie de fixation en direction de l'axe (2) de rotation, chaque partie (41) profilée ayant en section transversale au moins une courbure profilée, dans lequel
• il est défini entre un espace (27) de déviation et le diaphragme (25) d'aube directrice amont un plan (28) d'écoulement annulaire et perpendiculaire à l'axe (2) de rotation, plan par lequel le fluide s'écoule de l'espace (27) de déviation au diaphragme (25) d'aube directrice amont ;
• le plan (28) d'écoulement annulaire est subdivisé en au moins un cylindre (32) coaxial qui est ou sont subdivisé (s) en pistes (34) ;
• il est défini pour le fluide passant par le plan (38) d'écoulement pour chaque piste (34) une composante (31) d'écoulement dirigée tangentiellement à l'arc de la piste (34) et se trouvant dans le plan (28) d'écoulement ; et
• le rotor du compresseur a pour chaque piste (34) une composante (39) dans la direction de rotation dirigée tangentiellement à l'arc de la piste (34) et se trouvant dans le plan (28) d'écoulement,
**caractérisé**
**en ce qu'**à chaque piste (34) est associée une partie (40) correspondante de sous-profil des aubes (24) directrices amont du diaphragme (25) d'aube directrice amont, dont la courbure de profil dépend de la composante (31) de courant et de la composante (39) dans la direction de rotation, de sorte qu'au moins deux des aubes (24) directrices amont ont des courbures de profil différentes.

2. Diaphragme (25) d'aube directrice amont suivant la revendication 1,
**caractérisé en ce que**
le diaphragme (25) d'aube directrice amont est subdivisé en secteurs (33) annulaires, les aubes (24) directrices amont d'un secteur (33) annulaire ayant des parties (41) de profil identiques et les aubes (24) directrices amont de secteurs (33) annulaires différents ayant des parties (41) profilées courbées différemment.

3. Diaphragme (25) d'aube directrice amont suivant la revendication 2,
**caractérisé en ce que**
chaque secteur (33) annulaire du diaphragme (25) d'aube directrice amont ne comporte qu'une aube (24) directrice amont.

4. Diaphragme (25) d'aube directrice amont suivant la revendication 1, 2 ou 3,
**caractérisé en ce que**
le canal d'aspiration a, en amont, une amenée dirigée sensiblement perpendiculairement à l'axe (2) de rotation et un espace de déviation s'y raccordant qui entoure le rotor du compresseur et dans lequel le fluide qui peut être apporté en direction radiale par l'amenée peut être dévié en direction axiale vers le diaphragme (25) des aubes directrices amont.

5. Diaphragme (25) d'aube directrice amont suivant l'une des revendications 1 à 4,
**caractérisé en ce que**
la partie (41) profilée des aubes (24) directrices amont qui s'étend de la partie de fixation en direction de l'axe (2) de rotation est formée de plusieurs sous-parties (40) profilées qui se succèdent et qui ont, respectivement, en section transversale une courbure de profil ; et
**en ce que** la courbure de profil d'une sous-partie (40) de profil est, rapportée à la courbure de profil d'une autre sous-partie (40) de profil de la même aube (24) directrice amont, courbée de façon différente.

6. Diaphragme (25) d'aube directrice amont suivant l'une des revendications précédentes,
**caractérisé en ce que**
la piste (34) dans laquelle la composante (31) de courant et la composante dans la direction de rotation sont opposées à une sous-partie (40) de profil correspondante ayant une section transversale (47) plus courbée que la sous-partie (40) de profil dont la piste (34) correspondante a une composante (31) de courant qui est dirigée dans le même sens que la composante suivant la direction de rotation.

7. Diaphragme (25) d'aube directrice amont suivant l'une des revendications précédentes,
**caractérisé en ce que**
la piste (34) dans laquelle la composante (31) de courant est presque nulle a une sous-partie (40) profilée correspondante ayant une section (47) transversale plus courbée que la sous-partie (40) profilée dont la piste (34) correspondante a une composante (31) de courant qui est dirigée dans le même sens que la composante dans la direction de rotation et a une section (45) transversale moins courbée que la sous-partie (40) profilée dont la piste correspondante a une composante (31) de courant qui est opposée à la composante dans la direction de rotation.

8. Diaphragme (25) d'aube directrice amont suivant l'une des revendications précédentes,
**caractérisé en ce que**
le plan (28) annulaire d'écoulement est subdivisé exactement en un cylindre (32) qui est subdivisé en deux pistes (34) de mêmes dimensions par des limites (35) de secteur côte à côte et s'étendant radialement et **en ce que** les limites (35) de secteur s'étendent parallèlement à l'entrée radiale du canal d'aspiration.

9. Compresseur (5) ayant un diaphragme (25) d'aube directrice amont suivant l'une des revendications 1 à 8.

10. Turbine (8) comprenant un compresseur (5) qui a un diaphragme (25) d'aube directrice amont suivant l'une des revendications 1 à 8.

11. Turbine (8) suivant la revendication 10,
**caractérisée**
**en ce que** la turbine (8) est constituée sous la forme d'une turbine à gaz fixe.
